# EUROPÄISCHE PATENTANMELDUNG

(11) **EP 1 890 099 A1**
(43) Veröffentlichungstag der Anmeldung: **20.02.2008**
(21) Anmeldenummer: 06023934.0
(22) Anmeldetag: 17.11.2006
(51) Int. Cl.: F25J 3/00, B01D 5/00, F28D 9/00, F28B 9/00

(54) **Rücklaufkondensator**

(30) Priorität: 08.08.2006 DE 102006037058
(71) Anmelder: Linde Aktiengesellschaft, 80807 München (DE)
(72) Erfinder: Hecht, Thomas, 82131 Gauting (DE); Schuhbeck, Josef, 84550 Feichten (DE)
(74) Vertreter: Imhof, Dietmar

(57) **Zusammenfassung**

Ein Rücklaufkondensator weist mindestens eine Wärmetauscherblock (1), der Rücklaufpassagen und Kältemittelpassagen aufweist, und einen Druckbehälter (2) auf, der den Wärmetauscherblock (1) oben und seitlich umschließt. Es sind Mittel (14, 15, 16, 17) zum Einführen von Dampf in den unteren Bereich der Rücklaufpassagen, Mittel (19) zum Abführen von Flüssigkeit aus dem unteren Bereich der Rücklaufpassagen, Mittel (29, 30) zum Abziehen von Dampf aus dem oberen Bereich der Rücklaufpassagen und Mittel zum Einführen von Kältemittel in die Kältemittelpassagen vorgesehen. Die Rücklaufpassagen kommunizieren an ihrem unteren Ende mit einem Header, der unterhalb des Wärmetauscherblocks (1) angeordnet ist und eine Phasentrenneinrichtung aufweist.

## Beschreibung

Die Erfindung betrifft einen Rücklaufkondensator gemäß dem Oberbegriff des Anspruchs 1.

Es sind zwei grundlegende Bauformen von Rücklaufkondensatoren bekannt. Entweder der Wärmetauscherblock (oder auch eine Mehrzahl von Wärmetauscherblöcken) ist im Inneren eines Druckbehälters angeordnet, wie dies zum Beispiel in EP 1189000 A2 dargestellt ist, oder der Wärmetauscherblock ist auf allen Seiten durch Header abgeschlossen, siehe zum Beispiel US 6128920. Die vorliegende Erfindung bezieht sich auf die erste Variante.

Die Rücklaufpassagen eines Rücklaufkondensators werden von unten mit Dampf beaufschlagt. Dieser kondensiert beim Aufsteigen in den Rücklaufpassagen teilweise. Die Rücklaufpassagen sind dabei so konstruiert, dass die kondensierte Flüssigkeit nicht mitgerissen wird, sondern nach unten fließt. Durch den Gegenstrom von Dampf und Flüssigkeit findet in den Rücklaufpassagen eine Rektifikation statt. Die Flüssigkeit, die am unteren Ende austritt, ist an schwererflüchtigen Komponenten angereichert, der oben austretende Dampf an leichterflüchtigen.

Ein Rücklaufkondensator (auch Dephlegmator genannt) kann als allein stehende Trenneinheit verwendet werden. Alternativ wird er als Kopfkondensator einer Trennkolonne eingesetzt und verstärkt deren Trennwirkung.

Räumliche Begriffe wie "oben", "unten", "seitlich" etc. beziehen sich hier immer auf die Orientierung des Rücklaufkondensators im bestimmungsgemäßen Betrieb.

Der Erfindung liegt daher die Aufgabe zugrunde, die Wirtschaftlichkeit eines Rücklaufkondensators der eingangs genannten Art zu verbessern und insbesondere günstige Herstellungs- und/oder Betriebskosten zu erreichen.

Diese Aufgabe wird dadurch gelöst, dass die Rücklaufpassagen an ihrem unteren Ende mit einem Header kommunizieren, der unterhalb des Wärmetauscherblocks angeordnet ist und eine Phasentrenneinrichtung aufweist.

Dieser Header stellt mindestens einen Teil der Mittel zum Einführen von Dampf in den unteren Bereich der Rücklaufpassagen und der Mittel zum Abführen von Flüssigkeit aus dem unteren Bereich der Rücklaufpassagen dar.

Obwohl der Wärmetauscherblock des erfindungsgemäßen Rücklaufkondensators im Inneren eines Druckbehälters installiert ist, sind seine Rücklaufpassagen nicht offen zum Zwischenraum zwischen Druckbehälter und Wärmetauscherblock, sondern weisen einen Header auf. Dies erscheint zunächst übertrieben aufwändig, hat aber den Vorteil, dass in dem Header eine Phasentrenneinrichtung angeordnet werden kann, die es ermöglicht, dass Dampf und Flüssigkeit unterhalb der Rücklaufpassagen wirksam voneinander getrennt werden können. Damit wird insbesondere verhindert, dass Flüssigkeit von der Dampfströmung mitgerissen wird. Insgesamt wird eine besonders hohe Wirksamkeit des Wärme- und Stoffaustauschvorgangs in dem Rücklaufkondensator erreicht.

Ein weiterer Vorteil der erfindungsgemäßen Konstruktion besteht darin, dass der Innenraum des Druckbehälters, also der Zwischenraum zwischen Druckbehälter und Wärmetauscherblock, für andere Zwecke genutzt werden und auch einen anderen Druck aufweisen kann als die Rücklaufpassagen.

Der Wärmetauscherblock wird vorzugsweise als Plattenwärmetauscher gefertigt, insbesondere als gelöteter Aluminium-Plattenwärmetauscher.

Es ist günstig, wenn die im Header angeordnete Phasentrenneinrichtung einen Boden aufweist, wobei der Boden mindestens eine Gasdurchtrittsöffnung enthält und die Gasdurchtrittsöffnung an ihrer Oberseite mit einer Umrandung zum Aufstauen von Flüssigkeit versehen ist.

Damit wird die aus den Rücklaufpassagen austretende Flüssigkeit auf dem Boden gesammelt. Der aufsteigende und später in die Rücklaufpassagen eintretende Dampf strömt über die Gasdurchtrittsöffnung an der aufgestauten Flüssigkeit vorbei, ohne einen wesentlichen Druckverlust zu erleiden und ohne dabei Flüssigkeitströpfchen mitzureißen. Die Umrandung verhindert, dass Flüssigkeit durch die Gasdurchtrittsöffnung abfließt.

Die Umrandung der Gasdurchtrittsöffnung kann durch eine oder mehrere vertikale Wände gebildet werden, im einfachsten Fall durch eine zylindermantelförmige Wand mit vertikaler Symmetrieachse. Es sind aber auch andere Formen von Umrandungen denkbar, zum Beispiel solche, die sich nach erweitern oder verjüngen. Die Umrandung ist vorzugsweise unmittelbar am Rand der Gasdurchtrittsöffnung angeordnet, kann aber auch einen gewissen Abstand zum Rand der Gasdurchtrittsöffnung aufweisen.

Die Unterseite der Gasdurchtrittsöffnung kann in Strömungsverbindung mit dem Kopf einer Trennkolonne stehen, sodass deren Kopfgas in die Rücklaufpassagen einströmt.

Die Phasentrenneinrichtung des Wärmetauscherblocks weist zum Beispiel ein bis zehn Gasdurchtrittsöffnungen, vorzugsweise zwei bis sechs Gasdurchtrittsöffnungen auf.

Vorzugsweise weist die Phasentrenneinrichtung mindestens ein Ablaufrohr für auf dem Boden angestaute Flüssigkeit auf. Über dieses Ablaufrohr wird die auf dem Boden aufgefangene Flüssigkeit getrennt vom eintretenden Dampfstrom abgeführt.

Das Ablaufrohr kann zum Beispiel in Strömungsverbindung mit einem Flüssigkeitsverteiler stehen, der die in den Rücklaufpassagen gebildete Flüssigkeit auf den Stoffaustauschabschnitt einer Trennkolonne verteilt, die geordnete Packung oder Füllkörper enthält. Im Falle einer Bodenkolonne mündet das Ablaufrohr auf einen Kolonnenboden.

Es ist ferner vorteilhaft, wenn oberhalb der Gasdurchtrittsöffnung eine Abdeckung mit Abstand zum Boden angeordnet ist, die mindestens einen Teil der Querschnittsfläche der Gasdurchtrittsöffnung überdeckt. Auf diese Weise wird verhindert, dass aus den Rücklaufpassagen herabregnende Flüssigkeit in die Gasdurchtrittsöffnung gelangt. Die Abdeckung überdeckt vorzugsweise den gesamten Querschnitt der Gasdurchtrittsöffnung. Der vertikale Abstand zum Boden beziehungsweise zum oberen Ende der Umrandung wird dabei so gewählt, dass der Dampf ohne nennenswerten Druckverlust hindurchströmen kann. Die gesamte Konstruktion kann nach dem Prinzip eines Kaminbodens ausgeführt sein.

Im Rahmen der Erfindung kann dem eintretenden Dampf wesentlich größere Querschnittsfläche geboten werden als bei einem üblichen Header mit Rohranschluss. Vorzugsweise beträgt der Querschnitt der Gasdurchtrittsöffnung der Phasentrenneinrichtung mindestens 5 %, insbesondere mindestens 10 %, insbesondere mindestens 15 %, beispielsweise 15 bis 40 % der unteren Stirnfläche des Wärmetauscherblocks. Falls die Phasentrenneinrichtung mehr als eine Gasdurchtrittsöffnung aufweist, gilt dieses Maß für die Summe der Querschnitte aller Gasdurchtrittsöffnungen.

Der Header kann ebene, insbesondere rechteckige Seitenwände aufweisen, die mit den unteren Kanten des Wärmetauscherblocks verbunden sind. Er kann außerdem einen Boden aufweisen, der auch den Boden der Phasentrenneinrichtung bildet. Zum Beispiel weist er insgesamt die Form eines Quaders auf, dessen obere Stirnfläche durch die untere Stirnfläche des Wärmetauscherblocks gebildet wird. Alternativ kann er auch die Form eines Zylindermantels aufweisen; entsprechende Headerformen sind in der älteren europäischen Patentanmeldung 05026404 und den dazu korrespondierenden Anmeldungen dargestellt.

Die Mittel zum Einführen von Kältemittel in die Kältemittelpassagen sind als seitliche Öffnungen des Wärmetauscherblocks ausgebildet, über welche die Kältemittelpassagen mit dem Zwischenraum zwischen Druckbehälter und Wärmetauscherblock kommunizieren. Damit kann dieser Zwischenraum für die Heranführung von Kältemittel genutzt werden, ohne dass ein Header zu diesem Zweck benötigt wird. Falls das Kältemittel flüssig eingeführt wird, kann der Zwischenraum zwischen Druckbehälter und Wärmetauscherblock als Flüssigkeitsbad genutzt werden. Die seitlichen Öffnungen sind dann so angeordnet, dass sie im Betrieb des Rücklaufkondensators unterhalb der Flüssigkeitsoberfläche liegen. Sie können an einer oder zwei Seiten des Wärmetauscherblocks angeordnet sein.

Vorzugsweise sind die Kältemittelpassagen außerdem an der Oberseite des Wärmetauscherblocks nach oben offen. Auf diese Weise können die Kältemittelpassagen wie ein gewöhnlicher Umlaufverdampfer (Badverdampfer) mit Hilfe des Thermosiphon-Effekts betrieben werden, ohne dass auf der Kältemittelseite Header benötigt werden. Der Wärmetauscherblock weist dann außer dem beschriebenen Header für die Rücklaufpassagen am unteren Ende nur noch einen weiteren Header auf, der als Mitteln zum Abziehen von Dampf aus dem oberen Bereich der Rücklaufpassagen dient. Alternativ können am oberen Ende zwei entsprechende Header an einander gegenüberliegenden Seiten des Wärmetauscherblocks angeordnet sein.

Die Erfindung betrifft außerdem eine Anwendung eines Rücklaufkondensators gemäß dem Patentanspruch 9.

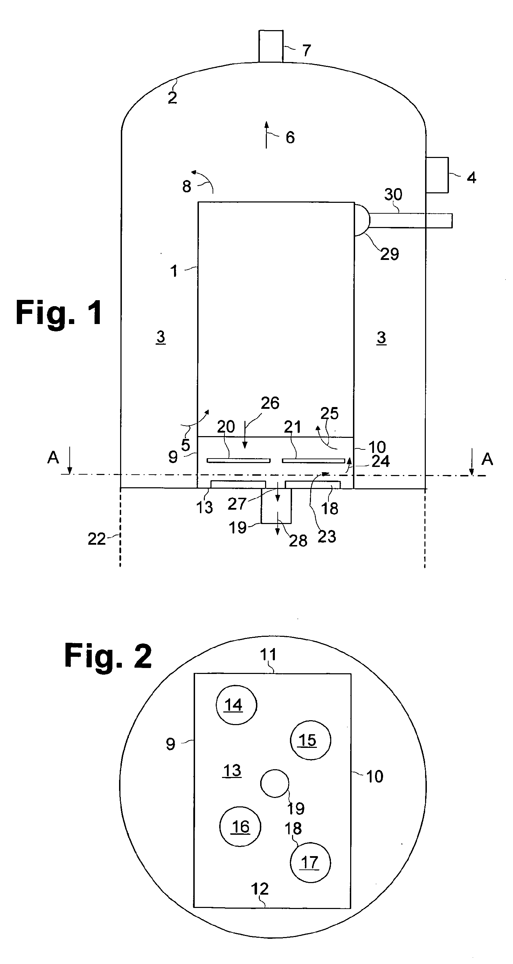

Die Erfindung sowie weitere Einzelheiten der Erfindung werden im Folgenden anhand eines in den Zeichnungen schematisch dargestellten Ausführungsbeispiels näher erläutert. Figur 1 zeigt einen Längsschnitt, Figur 2 einen Querschnitt in der Ebene A-A.

Ein Wärmetauscherblock 1 ist im Inneren eines Druckbehälters 2 angeordnet. Er ist als gelöteter Aluminium-Plattenwärmetauscher ausgebildet und weist abwechselnd Rücklaufpassagen und Kältemittelpassagen auf, die nicht im Einzelnen dargestellt sind.

Die Kältemittelpassagen funktionieren bei dem Ausführungsbeispiel als Umlaufverdampfer. Ein flüssiges Kältemittel wird über einen Stutzen 4 in den Zwischenraum 3 zwischen Druckbehälter 3 und Wärmetauscherblock 1 eingeführt und bildet dort ein Flüssigkeitsbad. Über seitliche Öffnungen der Kältemittelpassagen strömt Flüssigkeit 5 aus dem Bad in die Kältemittelpassagen ein. Durch den Thermosiphon-Effekt wird ein Zwei-Phasen-Gemisch in den Kältemittelpassagen nach oben geführt und tritt an der Oberseite des Wärmetauscherblocks 1 aus den dort offenen Kältemittelpassagen aus. Gasförmiges Kältemittel 6 wird über eine Gasleitung 7 abgezogen, flüssig verbliebenes Kältemittel 8 fällt in das Flüssigkeitsbad zurück.

Die Rücklaufpassagen sind an ihrem unteren Ende offen und kommunizieren mit einem Header, der unterhalb des Wärmetauscherblocks 1 angeordnet ist. Der Header weist vier rechteckige Seitenwände 9, 10, 11, 12 und einen Boden 13 auf. Der Boden 13 bildet gleichzeitig den Boden einer Phasentrenneinrichtung und weist in dem Beispiel vier Gasdurchtrittsöffnungen 14, 15, 16, 17 auf. Die Gasdurchtrittsöffnungen sind an ihrer Oberseite mit je einer Umrandung 18 zum Aufstauen von Flüssigkeit versehen. Sie verhindern insbesondere, dass auf dem Boden aufgestaute Flüssigkeit in die Gasdurchtrittsöffnung gelangt. Über ein Ablaufrohr 19 kann die aufgestaute Flüssigkeit abfließen. Oberhalb der Gasdurchtrittsöffnungen ist jeweils eine Abdeckung 20, 21 angeordnet.

Der Rücklaufkondensator ist unmittelbar auf dem Kopf einer Trennkolonne angeordnet. Die Kolonnenwand 22 ist in Figur 1 durch gestrichelte Linien angedeutet. Dampf 23 aus dem Kolonnenkopf strömt über die Gasdurchtrittsöffnungen, wird von den Abdeckungen 20, 21 umgelenkt (24) und strömt schließlich in die Rücklaufpassagen ein (25). In den Rücklaufpassagen gebildete Flüssigkeit (26) tritt aus deren unterem Ende aus, trifft gegebenenfalls auf eine der Abdeckungen 20, 21, wird auf dem Boden 13 aufgestaut und fließt schließlich über das Ablaufrohr 19 ab (27, 28). Der gasförmig verbliebene Anteil wird oben über einen seitlichen Header 29 und ein Gasabführrohr 30 aus den Rücklaufpassagen abgezogen. Abweichend von der Darstellung in der Zeichnung können am oberen Ende auch zwei oder mehr Header zum Abführen des gasförmig verbliebenen Anteils angeordnet sein.

## Patentansprüche

1. Rücklaufkondensator mit mindestens einem Wärmetauscherblock (1), der Rücklaufpassagen und Kältemittelpassagen aufweist, mit einem Druckbehälter (2), der den Wärmetauscherblock (1) oben und seitlich umschließt, mit Mitteln (14, 15, 16, 17) zum Einführen von Dampf in den unteren Bereich der Rücklaufpassagen, mit Mitteln (19) zum Abführen von Flüssigkeit aus dem unteren Bereich der Rücklaufpassagen, mit Mitteln (29, 30) zum Abziehen von Dampf aus dem oberen Bereich der Rücklaufpassagen und mit Mitteln zum Einführen von Kältemittel in die Kältemittelpassagen, **dadurch gekennzeichnet, dass** die Rücklaufpassagen an ihrem unteren Ende mit einem Header kommunizieren, der unterhalb des Wärmetauscherblocks (1) angeordnet ist und eine Phasentrenneinrichtung aufweist.

2. Rücklaufkondensator nach Anspruch 1, **dadurch gekennzeichnet, dass** die Phasentrenneinrichtung einen Boden (13) aufweist, wobei der Boden mindestens eine Gasdurchtrittsöffnung (14, 15, 16, 17) enthält und die Gasdurchtrittsöffnung an ihrer Oberseite mit einer Umrandung (18) zum Aufstauen von Flüssigkeit versehen ist.

3. Rücklaufkondensator nach Anspruch 2, **dadurch gekennzeichnet, dass** die Phasentrenneinrichtung mindestens ein Ablaufrohr (19) für auf dem Boden (13) angestaute Flüssigkeit aufweist.

4. Rücklaufkondensator nach einem der Ansprüche 2 oder 3, **dadurch gekennzeichnet, dass** oberhalb der Gasdurchtrittsöffnung (14, 15, 16, 17) eine Abdeckung (20, 21) mit Abstand zum Boden (13) angeordnet ist, die mindestens einen Teil der Querschnittsfläche der Gasdurchtrittsöffnung überdeckt.

5. Rücklaufkondensator nach einem der Ansprüche 1 bis 4, **dadurch gekennzeichnet, dass** der Querschnitt der Gasdurchtrittsöffnung beziehungsweise die Summe der Querschnitte aller Gasdurchtrittsöffnungen (14, 15, 16, 17) der Phasentrenneinrichtung mindestens 5 %, insbesondere mindestens 10 %, insbesondere mindestens 15 % der unteren Stirnfläche des Wärmetauscherblocks (1) beträgt.

6. Rücklaufkondensator nach einem der Ansprüche 1 bis 5, **dadurch gekennzeichnet, dass** der Header ebene, insbesondere rechteckige Seitenwände (9, 10, 11, 12) aufweist, die mit den unteren Kanten des Wärmetauscherblocks (1) verbunden sind.

7. Rücklaufkondensator nach einem der Ansprüche 2 bis 6, **dadurch gekennzeichnet, dass** der Header einen Boden aufweist, der auch den Boden der Phasentrenneinrichtung bildet.

8. Rücklaufkondensator nach einem der Ansprüche 1 bis 7, **dadurch gekennzeichnet, dass** die Mittel zum Einführen von Kältemittel in die Kältemittelpassagen als seitliche Öffnungen des Wärmetauscherblocks (1) ausgebildet sind, über welche die Kältemittelpassagen mit dem Zwischenraum (3) zwischen Druckbehälter (2) und Wärmetauscherblock (1) kommunizieren.

9. Anwendung eines Rücklaufkondensators nach einem der Ansprüche 1 bis 8 als Kopfkondensator einer Trennkolonne.
